## Europäisches Patentamt
## European Patent Office
## Office européen des brevets

(11) Publication number: **0 036 334**
**B1**

(12) **EUROPEAN PATENT SPECIFICATION**

(45) Date of publication of patent specification: **13.02.85**

(51) Int. Cl.⁴: **G 05 D 13/62, B 60 K 31/00**

(21) Application number: **81301144.2**

(22) Date of filing: **18.03.81**

(54) **Vehicle speed control.**

(30) Priority: **19.03.80 GB 8009243**
**25.09.80 GB 8031051**

(43) Date of publication of application:
**23.09.81 Bulletin 81/38**

(45) Publication of the grant of the patent:
**13.02.85 Bulletin 85/07**

(84) Designated Contracting States:
**AT BE CH DE FR GB IT LI LU NL SE**

(56) References cited:
**BE-A- 650 138**
**FR-A-2 207 044**
**US-A-3 437 188**
**US-A-3 691 525**
**US-A-3 882 973**
**US-A-3 948 569**
**US-A-4 193 642**

(73) Proprietor: **OGDEN ELECTRONICS LTD.**
**c/o The Ogden Group of Companies**
**Otley Yorkshire (GB)**

(72) Inventor: **Steel, James**
**Cairn House Farm**
**Dalton Newcastle Upon Tyne (GB)**

(74) Representative: **Gordon, Richard John Albert**
**et al**
**F.J. CLEVELAND & COMPANY 40-43, Chancery**
**Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to apparatus for controlling speed of a vehicle.

With heavy vehicles, such as large dump trucks used in the mining and construction industries for transporting loads of up to, for example, 86 tonnes, it is known to provide a retarder for each such vehicle. The retarder of such a vehicle generally comprises a pneumatic coupling in the form of a pair of rotary members which cooperate one with another to define an air chamber therebetween, the arrangement being such that rotation of one member relative to the other to effect retardation of the vehicle is controlled by pressure of air directed into the chamber. The air pressure is controlled by a valve which generally is operated by a manually operable lever located adjacent a steering column of the vehicle.

In the mining and construction industries it is desirable for safety reasons to ensure that dump trucks, especially when laden, travel at slow speed, i.e. below 40 k.p.h. (25 m.p.h.). One method of imposing restrictions on the speed at which such vehicles should move is to provide notices addressed to drivers of the vehicles indicating an upper speed beyond which the vehicles should not be driven. Such methods of imposing speed restrictions are unsatisfactory because instructions displayed on notices often are not acted upon by drivers to whom the notices are addressed.

Furthermore, driving such vehicles at slow speed often frustrates drivers of the vehicles with a result that the vehicles may be driven at a speed beyond that predetermined and displayed on the notices.

It is known to provide apparatus for controlling a vehicle having a retarder, the apparatus comprising a speed control sensor for sensing when the speed of the vehicle exceeds a reference speed, an electric circuit for controlling operation of a valve for controlling supply of working fluid to the retarder and a lamp adapted to be illuminated when the valve is operative in response to signals received from the sensor whereby a driver of the vehicle is provided with indication that the retarder is operative. An example of such apparatus is disclosed in U.S. Patent specification No. 3 882 973.

While such known apparatus is suitable in certain circumstances, such as when a reference speed is applicable for the duration of a period during which the vehicle is being driven or such as when a driver has no particular incentive to complete a journey in the shortest possible time, the apparatus is not suitable in other circumstances.

For example, it may be desirable to vary the reference speed during the period when the vehicle is being driven, such as when it is necessary for the vehicle to pass through a dangerous or hazardous portion of a journey and it is desirable to reduce the reference speed while the vehicle is passing through that portion of the journey.

With apparatus disclosed in U.S. patent specification No. 3 882 973, there is no facility for adjusting reference speed during a journey of a vehicle because the reference speed is preselected for each vehicle.

A solution would be to provide the speed control sensor with a radio receiver for receiving signals from radio transmitters located along a route of a vehicle. The vehicle could be provided with an electric circuit comprising a comparator for comparing the speed of the vehicle with a reference speed represented in the form of radio signals received from each transmitter and adapted to generate output signals for effecting operation of an indicating device, such as a lamp. An example of such a system is disclosed in U.S. patent specification No. 3 691 525.

The signals transmitted from the respective transmitters could be indicative of different reference speeds and the output from the comparator could be arranged to control operation of a valve in the vehicle for effecting operation of the retarder in addition to effecting operation of the indicating device.

Such a system would not be entirely satisfactory, however, because it would not provide a solution to the problem that a driver could ignore the warning provided by the indicating device in an attempt to complete a journey in the shortest possible time and thereby receive financial reward for productivity gain at the expense of ignoring speed regulations.

Different methods have been proposed for controlling progressively power to be applied to brakes of a vehicle; see for example U.S. patent specification No. 3 437 188. Such methods could be employed with vehicles used in the mining and construction industries but would not achieve a desired objective, which is to force drivers of vehicles to obey speed regulations rather than provide automatic control of brakes of the vehicles with the possibility of accidents being caused because control of the vehicles by the drivers would be over-ridden by automatic control.

The desired object is overcome with the present invention which is characterised in that a plurality of valves are provided for controlling supply of working fluid to the retarder, each valve being adapted to permit fluid to pass from a source to the retarder at a reduced pressure compared with the pressure of the fluid at source, operation of the valves being controlled by a timing device operable in response to output signals from the comparator so that valves are sequentially operated while the speed of the vehicle continues to exceed the reference speed whereby pressure of fluid supplied to the retarder is progressively increased in stages each of predetermined duration, and the increased pressure is maintained until manual controls of the vehicle are operated to effect reduction of the speed of the vehicle below the reference speed.

Therefore, with apparatus according to the invention although an indicator is actuated immediately the speed of a vehicle exceeds a reference speed, the retarder is not actuated until after an interval of a few seconds from operation of the indicator. In this manner, a driver is warned that the speed of the vehicle exceeds a reference speed and is permitted sufficient time in which to apply brakes of the vehicle to retard the vehicle to a speed less than the reference speed. If the driver fails to respond to the warning within a predetermined interval determined by the timing device, a valve is operated whereby working fluid at a pressure which is a percentage of the full pressure of the working fluid at source is permitted to pass to the retarder whereby the retarder is actuated resulting in sharp retardation of the vehicle. If the driver still fails to respond to the warning and causes the vehicle to accelerate, in spite of the effect of the retarder, thereby to cause the speed of the vehicle again to exceed the reference speed, the process is repeated with operation a second indicator followed by operation of a second valve a few seconds later if the driver does not apply the brakes during the second interval to retard the vehicle to a speed less than the reference speed. Operation of the valve permits working fluid at a greater percentage of the full pressure than previously to pass to the retarder. The process may be repeated with additional indicators and corresponding valves.

Drivers of vehicles provided with apparatus according to the invention therefore are provided with a warning when the speed of the vehicle exceeds a reference speed and further warning if the, or an earlier, warning is ignored, each warning being followed by an automatic sharp retardation of the vehicle.

With such apparatus, drivers learn to control their vehicles in accordance with instructions displayed on notices located along routes of the vehicles.

Following is a description, by way of example only and with reference to the accompanying drawing, of one method of carrying the invention into effect.

In the drawing:—

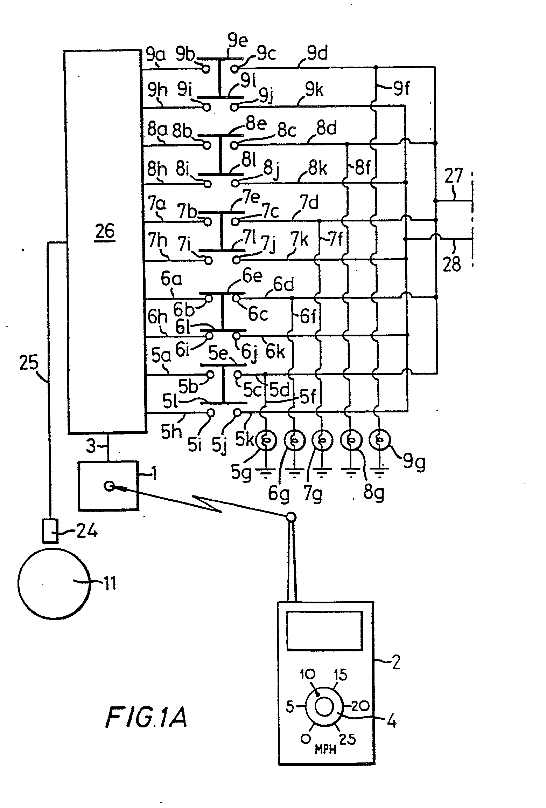

Figure 1A is a diagrammatic representation of apparatus for transmitting and receiving signals and for comparing the signals with other signals in accordance with the present invention, and

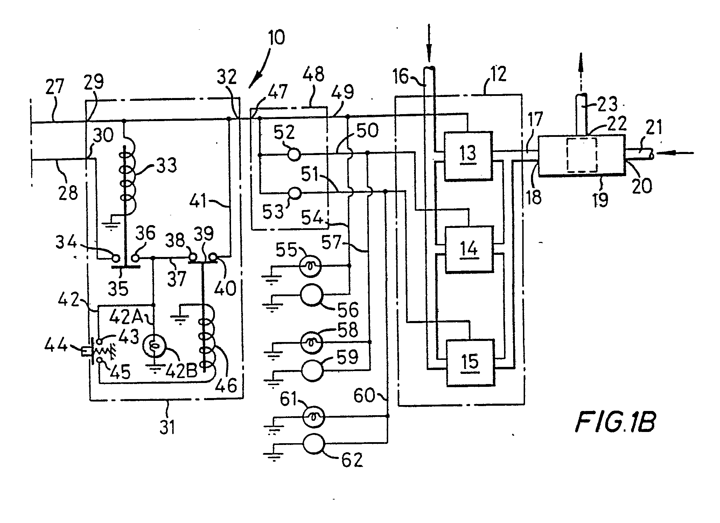

Figure 1B is a continuation of Figure 1A showing a diagrammatic representation of apparatus for controlling retarding means of a vehicle in accordance with signals received from the apparatus shown in Figure 1A.

Referring now to Figure 1A of the drawing, there is shown a receiver 1 carried on a vehicle (not shown) and adapted to receive radio signals from a transmitter 2 mounted adjacent a roadway along which the vehicle is driven. The receiver 1 is connected to a processor 26, also carried on the vehicle, by means of a line 3.

The signals transmitted to the receiver 1 by the transmitter 2 are indicative of reference speed of the vehicle. The reference speed is selected by a dial 4 on the transmitter and may be any one of 8 k.p.h. (5 m.p.h.), 16 k.p.h. (10 m.p.h.), 24 k.p.h. (15 m.p.h.), 32 k.p.h. (20 m.p.h.) or 40 k.p.h. (25 m.p.h.), the signal transmitted by the transmitter varying in accordance with each corresponding selected speed. The signals thus received by the receiver 1 carried by a vehicle moving relative to the transmitter 2 are indicative of a selected reference speed for the vehicle when moving along the roadway adjacent which the transmitter is located and are transmitted from the receiver 1 to the processor 26 along the line 3.

The processor 26 is provided with five pairs of lines 5a, 5h; 6a, 6h; 7a, 7h; 8a, 8h; and 9a, 9h, each being connected to a corresponding one of terminals 5b, 5i; 6b, 6i; 7b, 7i; 8b, 8i and 9b, 9i. The terminals are each included in corresponding switches comprising a second terminal 5c, 5j; 6c, 6j; 7c, 7j; 8c, 8j; and 8c, 9j connected to a line, 5d, 5k; 6d, 6k; 7d, 7k; 8d, 8k and 9d, 9k and switch contacts 5e, 5l; 6e, 6l; 7e, 7l; 8e, 8l; and 9e, 9l, the contacts of each pair being ganged. The lines 5d, 6d, 7d, 8d, and 9d are connected in parallel one with another and in series with a first output line 27 and the lines 5k, 6k, 7k, 8k, and 9k are connected in parallel one with another and in series with a second output line 28. The lines 5d, 6d, 7d, 8d, and 9d are tapped by a corresponding one of lines 5f, 6f, 7f, 8f, and 9f each of which is connected to a corresponding one of indicator lamps 5g, 6g, 7g, 8g, and 9g.

The arrangement is such that the ganged pair of switch contacts 5e, 5l; 6e, 6l; 7e, 7l; 8e, 8l, and 9e, 9l are closed when corresponding relays (not shown) are operated and the relays are controlled to operate in sequence by the processor 26 on receipt of signals received from the sensor 24 indicative of an increase in speed of the vehicle. The contacts 5e, 5l are closed when the speed of the vehicle is greater than 0 m.p.h. but less than 9.6 k.p.h. (6 m.p.h.) the contacts 6e, 6l are closed when the speed of the vehicle is greater than 9.6 k.p.h. (6 m.p.h.) but less than 17.6 k.p.h. (11 m.p.h.); the contacts 7e, 7l are closed when the speed of the vehicle is greater than 17.6 k.p.h. (11 m.p.h.) but less than 25.6 k.p.h. (16 m.p.h.); the contacts 8e, 8l are closed when the speed of the vehicle is greater than 25.6 k.p.h. (16 m.p.h.) but less than 33.6 k.p.h. (21 m.p.h.) and the contacts 9e, 9l are closed when the speed of the vehicle is greater than 40 k.p.h. (25 m.p.h.).

The processor 26 is arranged to transmit signals along the correponding pair of lines 5a, 5h; 6a, 6h; 7a, 7h; 8a, 8h and 9a, 9h when there is corelation between actual speed and reference speed. In the example shown in Figure 1A the reference speed selected by the dial 4 of the transmitter 2 is 16 k.p.h. (10 m.p.h.) and the speed of the vehicle is between 9.6 k.p.h. (6 m.p.h.) and 17.6 k.p.h. (11 m.p.h.), as indicated by the contacts 6e, 6l which are in a closed condition. When the vehicle exceeds 16 k.p.h. (10 m.p.h.), a signal is transmitted along the line 6a, across the contact 6e, along the line 6d and along the output line 27. The indicator lamp 6g is illuminated indicating that the speed of the vehicle is equal to or has exceeded 16 k.p.h. (10 m.p.h.). If the speed subsequently falls below 16 k.p.h. (10 m.p.h.), the signal transmitted along the line 6a to the line 27 is removed, the lamp 6g, being extinguished, and a signal is transmitted along the line 6h, across the contact 6l, along the line 6k and along the output line 28.

The effect of signals being transmitted to lines 27 and 28 will now be described with reference to Figure 1B which shows apparatus 10 for controlling a pneumatic system of the vehicle. A portion of the braking system is shown at 12 and comprises three electrically operated valves 13, 14 & 15 each of which is connected to a common air supply through a conduit 16. An output of each of the valves 13, 14 & 15 is connected to a common feed conduit 17 which is connected to an input 18 of a slide valve 19. A second input 20 of the slide valve 19 has connected thereto a conduit 21. An outlet 22 of the slide valve 19 has connected thereto a conduit 23 for supplying a retarder (not shown) of the vehicle.

The arrangement is such that, if none of the valves 13, 14 & 15 is operated air supply can only be directed through the conduit 21 to the slide valve 19 and through the slide valve and the conduit 23 to the retarder to retard the vehicle. The pressure of air directed to the conduit 21 is controlled by operation of a lever (not shown) on a control column (not shown) of the vehicle.

The valve 13 is arranged such that, when operated, air supplied thereto is permitted to pass therethrough onward to the conduit 17 and to the slide valve 19, operating the slide valve and subsequently passing through the conduit 23 to the retarder. Similarly, the valves 14 and 15, when operated, also permit air supplied thereto to pass therethrough to the conduit 17 and the slide valve 19 and onward through the conduit 23 to the retarder. The valves 13, 14 and 15 are controlled, in a manner to be described hereinafter, to operate consecutively and the arrangement is such that, when the valve 13 is operated, only 30% of the pressure of the air supplied to the conduit 16 passes to the conduit 17 but, when the valve 14 is operated while the valve 13 continues to be operated, 60% of the pressure of the air supplied to the conduit 16 passes to the conduit 17, and, when the valve 15 is operated while the valves 13 and 14 continue to be operated, 90% of the pressure of the air supplied to the conduit 16 is passed to the conduit 17.

The lines 27, 28 are connected to input lines 29, 30 respectively of a latch and cancel unit 31. The input line 29 is connected to an output line 32 and is tapped by one end of a coil of a solenoid 33, the other end of which is earthed. The input line 28 is connected to a terminal 34 of a switch contact 35, the other terminal 36 of which is connected by a line 37 to a terminal 38 of another switch contact 39. The other terminal 40 of the switch contact 39 is connected by a line 41 to the output line 32.

The latch and cancel unit 31 also includes a line 42 tapped from the line 37 and connected to a terminal 43 of a "cancel" switch 44, the other terminal 45 of the switch 44 having connected thereto one end of a coil of a solenoid 46, the other end of the coil being earthed. The line 42 is tapped by a line 42A connected to a buzzer 42B.

The switch contact 35 is operated by the solenoid 33 and is normally open and the switch contact 39 is operated by the solenoid 46 and is normally closed.

The output line 32 of the latch and cancel unit 31 is connected to an input line 47 of a timing unit 48. The timing unit 48 has three output lines 49, 50 and 51. The output line 49 is a continuation of the input line 47. The output line 50 is tapped from the input line 47 and includes a timer 52 for delaying transmission of signals received from the input 47 for five seconds until transmitting the signals along the line 50. The output line 51 is tapped from the input line 47 and includes a timer 53 for delaying transmission of signals received from the input line 47 for thirteen seconds until transmitting the signals along the output line 51.

The output line 49 is connected to a terminal of the valve 13. The output line 50 is connected to a terminal of the valve 14 and the output line 51 is connected to a terminal of the valve 15.

The output line 49 is tapped by a line 54 connected to a warning lamp 55 and a buzzer 56 in parallel. The output line 50 is tapped by a line 57 which is connected to a warning lamp 58 and a buzzer 59 in parallel and the output line 51 is tapped by a line 60 connected to a warning lamp 61 and a buzzer 62 in parallel.

Assuming, therefore, that the speed of the vehicle exceeds the reference speed of 16 k.p.h. (10 m.p.h.), a voltage is supplied to output line 27 of the processor 26. In consequence, a voltage is transmitted along the input line 29 and the output line 32 of the latch and cancel unit 31, the input line 47 of the timing unit 48 and the output line 49 of the timing unit to the terminal of the valve 13. The valve 13 consequently is operated and air at 30% of the pressure supplied to the conduit 16 is passed through the conduit 17, the slide valve 19 and the conduit 23 to the retarder thereby effecting retardation of the vehicle. Simultaneously with operation of the valve 13 a voltage is directed along the line 54 causing the warning lamp 55 to illuminate and the buzzer 56 to sound. If the driver of the vehicle does not thereafter control the vehicle to reduce the vehicle speed after five seconds, a voltage is directed along the line 50 to the valve 14 causing the valve to operate and the pressure of air directed to the retarder through the conduits 17 and 23 to increase from 30% to 60% of the pressure of the air supplied to the conduit 16. A voltage also is directed along the line 57 with a result that the warning lamp 58 is illuminated and the buzzer 59 sounded. After a further thirteen seconds and assuming that no reduction of speed of the vehicle below 16 k.p.h. (10 m.p.h.) is effected, a voltage is applied along the line 51 to the valve 15 thereby operating the valve and increasing the pressure of the air supply to the retarder from 60% to 90% of the pressure of air supplied to the conduit 16 whilst simultaneously causing a voltage to be applied along the line 60 with a result that the warning lamp 61 is illuminated and the buzzer 62 is sounded.

The effect of 90% of full pressure of air directed to the retarder effects retardation of the vehicle to a speed below 16 k.p.h. (10 m.p.h.) with a result that the voltage applied to the output line 27 of the processor 26 is removed but a similar voltage is applied to the output line 28 of the processor 26 ensuring that the solenoid 33 remains energised and the switch contact 35 remains closed. The valves 13, 14 and 15 thus will continue to operate, the warning lamps 55, 58 and 61 will continue to be illuminated and the buzzers 56, 59 and 62 will continue to be sounded.

The apparatus is "reset" by operation of the "cancel" button 44 which connects the terminals 43 and 45 causing energisation of the solenoid 46 with a result that the switch contact 39 is opened and voltage supply to the output 32 of the latch and cancel unit 31 is cut off. The valves 13, 14 and 15 therefore are deactivated and compressed air supply to the conduit 17 is cut off. The retarder thus is deactivated and retardation of the vehicle is discontinued by means of automatic operation of the retarder.

In this manner, if the driver of a vehicle fails to take appropriate action to prevent the speed of the vehicle exceeding 16 k.p.h. (10 m.p.h.), the speed is automatically reduced by automatic operation of the retarder of the vehicle. The retarder continues to be automatically operated even after the vehicle speed has been automatically reduced to below the reference speed of 16 k.p.h. (10 m.p.h.) until the driver operates the "cancel" button 44.

It will be appreciated that the apparatus will operate in similar manner if any one of the other reference speeds is selected by the dial 4 of the transmitter and the vehicle exceeds the reference speed.

It will also be appreciated that a plurality of transmitters 2 may be located at spaced intervals adjacent and along the roadway to monitor speed of vehicles passing therealong and to control the speed if in excess of a reference speed.

**Claims**

1. Apparatus for controlling speed of a vehicle having a retarder, the apparatus comprising an electric circuit (24, 25, 26, 48) for generating first signals indicative of speed of the vehicle, and comparing said first signals with second signals received from a transmitter (2), said second signals being indicative of a reference speed, and generating third signals when said first signals are indicative that the speed of the vehicle is in excess of the reference speed, said third signals controlling operation of a valve (13, 14, 15) which controls supply of working fluid to the retarder so as to control progressively magnitude of power applied to the retarder characterised in that there is provided a plurality of valves (13, 14 and 15) each being adapted to permit fluid to pass from a source to the retarder at a reduced pressure compared with the pressure of the fluid at source, operation of the valves (13, 14, 15) being controlled by a timing device (48) operable in response to said third signals so that valves (13, 14, 15) are sequentially operated while the speed of the vehicle continues to exceed the reference speed whereby pressure of fluid supplied to the retarder is progressively increased in stages each of predetermined duration, and the increased pressure is maintained until manual controls of the vehicle are operated to effect reduction of the speed of the vehicle below the reference speed.

2. Apparatus as claimed in Claim 1 characterised in that the timing device (48) comprises a plurality of indicating devices (55, 56, 58, 59, 61, 62) each associated with a corresponding one of the valves (13, 14, 15) for warning a driver of the vehicle that the speed of the vehicle continues to exceed the reference speed while the or a plurality of the valves (13, 14, 15) are being operated.

3. Apparatus as claimed in Claim 2 characterised in that each indicating device (55, 56, 58, 59, 61, 62) comprises a lamp (55, 58, 61) and a buzzer (56, 59, 62) adapted to operate simultaneously.

**Patentansprüche**

1. Vorrichtung zum Steuern der Geschwindigkeit eines Fahrzeugs mit einem Verzögerer, wobei die Vorrichtung einen elektrischen Schaltkreis (24, 25, 26, 48) zum Erzeugen von die Geschwindigkeit des Fahrzeugs anzeigenden ersten Signalen und zum Vergleichen der ersten Signale mit von einem Sender (2) empfangenen zweiten Signalen, die eine Bezugsgeschwindigkeit anzeigen, und zum Erzeugen von dritten Signalen, wenn die ersten Signale anzeigen, daß die Geschwindigkeit des Fahrzeugs über der Bezugsgeschwindigkeit ist, aufweist des Fahrzeugs über der Bezugsgeschwindigkeit ist, aufweist, wobei die dritten Signale den Betrieb eines Ventils (13, 14, 15) steuern, das die Zufuhr von einem Arbeitsmedium zu dem Verzögerer steuert, um die Größe der dem Verzögerer zugeführten Kraft zunehmend zu steuern, dadurch gekennzeichnet, daß eine Vielzahl von Ventilen (13, 14 und 15) vorgesehen ist, von denen jedes dafür ausgebildet ist, Medium von einer Quelle zu dem Verzögerer mit einem im Vergleich zu dem Druck des Mediums an der Quelle verminderten Druck gehen zu lassen, wobei der Betrieb der Ventile (13, 14, 15) durch eine Zeitgebervorrichtung (48) gesteuert wird, die ansprechend auf die dritten Signale betriebsbereit ist, so daß die Ventile (13, 14, 15) sequentiell betrieben werden, während die Geschwindigkeit des Fahrzeugs weiterhin über der Bezugsgeschwindigkeit ist, wodurch der Druck des dem Verzögerer zugeführten Mediums fortschreitend in Stufen erhöht wird, von denen jede eine vorbestimmte Dauer hat, und der erhöhte Druck aufrechterhalten wird, bis die Handsteuerungen des Fahrzeugs betätigt werden, um eine Verminderung der Geschwindigkeit des Fahrzeugs unter die Bezugsgeschwindigkeit zu bewirken.

2. Vorrichtung nach Anspruch 1, dadurch gekennzeichnet, daß die Zeitgebervorrichtung (48) eine Vielzahl von Anzeigevorrichtungen (55, 56, 58, 61, 62) aufweist, von denen jede einem entsprechenden Ventil (13, 14, 15) zugeordnet ist, um einen Fahrer des Fahrzeugs zu warnen, daß die Geschwindigkeit des Fahrzeugs weiterhin über der Bezugsgeschwindigkeit ist, während die oder eine Vielzahl von Ventilen (13, 14, 15) betrieben wird.

3. Vorrichtung nach Anspruch 2, dadurch gekennzeichnet, daß jede Anzeigevorrichtung (55, 56, 58, 59, 61, 62) eine Lampe (55, 58, 61) und einen Summer (56, 59, 62) aufweist, die dafür ausgebildet sind, gleichzeitig zu arbeiten.

**Revendications**

1. Dispositif pour commander la vitesse d'un véhicule équipé d'un ralentisseur, le dispositif comprenant un circuit électrique (24, 25, 26, 48) pour engendrer des premiers signaux représentatifs de la vitesse du véhicule, et pour comparer ces premiers signaux à des seconds signaux reçus d'un émetteur (2), ces seconds signaux étant représentatifs d'un vitesse de référence, et pour engendrer des troisièmes signaux quand les premiers signaux indiquant que la vitesse du véhicule dépasse la vitesse de référence, ces troisièmes signaux commandant le fonctionnement d'une vanne (13, 14, 15) qui commande l'alimentation du ralentisseur en fluide de commande de façon à commander progressivement la valeur de la puissance appliquée au ralentisseur, caractérisé en ce que on emploie plusieurs vannes (13, 14 et 15), chaque vanne étant agencée pour permettre au fluide de passer d'une source au ralentisseur à une pression réduite par rapport à la pression du fluide à la source, le fonctionnement des vannes (13, 14 et 15) étant commandé par un dispositif temporisateur (48) qui fonctionne en réponse aux troisièmes signaux que l'on a mentionnés, si bien que les vannes fonctionnent séquentiellement tant que la vitesse du véhicule continue à dépasser la vitesse de référence, ce qui fait que la pression du fluide fourni au ralentisseur augmente progressivement, par étapes dont chacune a une durée prédéterminée, et que la pression ainsi augmentée est maintenue jusqu'à ce que les commandes manuelles du véhicule soient manoeuvrées pour effectuer la réduction de la vitesse du véhicule au-dessous de la vitesse de référence.

2. Dispositif selon la revendication 1, caractérisé en ce que le dispositif temporisateur (48) comprend plusieurs dispositifs indicateurs (55, 56, 58, 59, 61, 62), chacun d'eux étant associé à l'une des vannes (13, 14, 15) pour avertir le chauffeur du véhicule que la vitesse du véhicule continue à dépasser la vitesse de référence pendant que la vanne, ou plusieurs vannes (13, 14, 15) sont actionnées.

3. Dispositif selon la revendication 2, caractérisé en ce que chaque dispositif indicateur (55, 56, 58, 59, 61, 62) comprend une lampe (55, 58, 61) et un ronfleur (56, 59, 62) prévus pour fonctionner simultanément.

FIG.1A

FIG.1B